# EUROPEAN PATENT SPECIFICATION

(11) **EP 2 981 802 B1**
(45) Date of publication and mention of the grant of the patent: **13.11.2019**
(21) Application number: 14747710.3
(22) Date of filing: 07.04.2014
(51) Int. Cl.: G01N 1/44, G01N 1/40

(54) **A METHOD AND A DEVICE FOR ASSESSING WHETHER A DRUG OF ABUSE AND/OR A METABOLITE THEREOF IS PRESENT IN A KERATIN MATERIAL**
VERFAHREN UND VORRICHTUNG ZUR BEURTEILUNG DES VORHANDENSEINS EINER DROGE UND/ODER EINES METABOLITEN DAVON IN EINEM KERATINMATERIAL
PROCEDE ET DISPOSITIF POUR EVALUER SI UNE MEDICAMENT TOXICOMANOGENE ET/OU UN METABOLITE DE CELUI-CI EST PRESENT DANS UN MATERIAU DE KERATINE

(30) Priority: 06.04.2013 IT PI20130026
(43) Date of publication of application: 10.02.2016
(73) Proprietor: Università di Pisa, 56126 Pisa (IT)
(72) Inventor: CHERICONI, Silvio, I-54100 Massa (IT); GIUSIANI, Mario, I-56121 Pisa (IT); STEFANELLI, Fabio, I-56017 San Giuliano Terme (PI) (IT)
(74) Representative: Celestino, Marco
(86) International application number: PCT/IB2014/060507
(87) International publication number: WO 2014/162305

(56) References cited:
- PRAGST F ET AL: "State of the art in hair analysis for detection of drug and alcohol abuse", CLINICA CHIMICA ACTA, ELSEVIER BV, AMSTERDAM, NL, vol. 370, no. 1-2, 1 August 2006 (2006-08-01), pages 17-49, XP027877857, ISSN: 0009-8981 [retrieved on 2006-08-01]
- PRAGST F ET AL: "Analysis of fatty acid ethyl esters in hair as possible markers of chronically elevated alcohol consumption by headspace solid-phase microextraction (HS-SPME) and gas chromatography-mass spectrometry (GC-MS)", FORENSIC SCIENCE INTERNATIONAL, ELSEVIER SCIENTIFIC PUBLISHERS IRELAND LTD, IE, vol. 121, no. 1-2, 1 September 2001 (2001-09-01), pages 76-88, XP002487188, ISSN: 0379-0738, DOI: 10.1016/S0379-0738(01)00456-X
- MARSHALL R C ET AL: "Structure and biochemistry of mammalian hard keratin", ELECTRON MICROSCOPY REVIEWS,, vol. 4, no. 1, 1 January 1991 (1991-01-01) , pages 47-83, XP024435168, ISSN: 0892-0354, DOI: 10.1016/0892-0354(91)90016-6 [retrieved on 1991-01-01]
- LUSIANA ET AL: "Keratin film made of human hair as a nail plate model for studying drug permeation", EUROPEAN JOURNAL OF PHARMACEUTICS AND BIOPHARMACEUTICS, ELSEVIER SCIENCE PUBLISHERS B.V., AMSTERDAM, NL, vol. 78, no. 3, 31 January 2011 (2011-01-31), pages 432-440, XP028241960, ISSN: 0939-6411, DOI: 10.1016/J.EJPB.2011.01.022 [retrieved on 2011-02-06]
- SHIN S ET AL: "Microwave-assisted extraction of human hair proteins", ANALYTICAL BIOCHEMISTRY, ACADEMIC PRESS INC, NEW YORK, vol. 407, no. 2, 15 December 2010 (2010-12-15), pages 281-283, XP027354977, ISSN: 0003-2697 [retrieved on 2010-08-21] cited in the application
- FRANK MUSSHOFF ET AL: "Analytical pitfalls in hair testing", ANALYTICAL AND BIOANALYTICAL CHEMISTRY, SPRINGER, BERLIN, DE, vol. 388, no. 7, 8 May 2007 (2007-05-08), pages 1475-1494, XP019537478, ISSN: 1618-2650, DOI: 10.1007/S00216-007-1288-X
- Ronald R. Watson ET AL: "Detection of Ethanol Consumption by ELISA Assay Measurement of Acetaldehyde Adducts in Murine Hair", Alcohol, vol. 16, no. 4, 1 November 1998 (1998-11-01), pages 279-284, XP055468574, AMSTERDAM, NL ISSN: 0741-8329, DOI: 10.1016/S0741-8329(98)00014-7

## Description

### DESCRIPTION

### Field of the invention

The present invention relates to a method and to a device for assessing whether a subject has taken and/or habitually takes one or several drugs of abuse, by analysing a subject's hair material, for example hair or other hair material.

### Background of the invention - Technical problems

Laboratory methods are known for assessing whether a subject has taken or usually takes drugs of abuse by analysing his/her keratin material. In particular:
- immunochemical methods are known, which are based on an antigen-antibody interaction and can use, for instance, immunofluorescence or polarized light detection techniques;
- chromatographic methods, which can use, for instance, gas chromatography or liquid chromatography techniques, in combination with mass spectrometry (GC-MS; LC-MS).

Both types of methods require that the keratin material is treated to extract any possible drugs, or metabolite thereof, and to obtain liquid samples that are subjected to the aforementioned analysis techniques. For example, a solution that can extract the most common drugs of abuse and provide samples suitable for immunochemical analysis is manufactured by the company COMEDICAL under the trade name "VMA".

The two above-mentioned methods require a professional equipment, which can be successfully used only by skilled personnel. This has several drawbacks:
- the analysis equipment is very expensive;
- the training of the personnel in charge of using this equipment is also very expensive;
- the time required to prepare the samples for the analysis is not negligible;
- the analysis cannot be carried out at home, in order to save the privacy, which the possible drug consumer's relatives are expected to wish;
   Moreover,
- very precise amounts of keratin material must be used to prepare the keratin material for the extraction, which can be measured only by a precision scale;
- some solvents used with the equipment can cause safety problems;
- the above-mentioned methods are not very reliable with cosmetically treated hair.

Devices are also known for quickly carrying out immunochromatographic quick tests, also known as "on-site" kits, which make it possible to qualitatively assess whether a subject has taken a drug of abuse, in an easy way and in a very short time, without requiring skilled personnel.

However, presently available immunochromatographic quick test devices can be used only for analysing such biological fluids as saliva and urine. The drugs of abuse and their metabolites have a relatively short residence time in these biological fluids. For instance, the opiates have a residence time on average of 48-72 hours in the urine, and an even lower residence time in the saliva.

In order to obtain reliable results, the urine or the saliva must be tested by a relatively short time after the drug intake. Therefore, these methods can only detect the so-called actuality of use, in case of the saliva, or a recent use, in case of the urine, and do not allow assessing a subject's previous or habitual use of drugs of abuse.

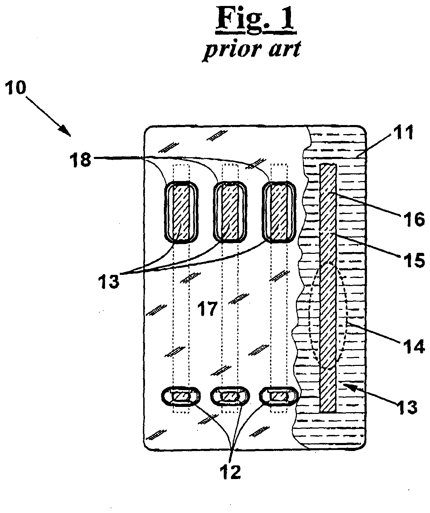

As shown in Fig. 1, an "on-site" kit 10 essentially comprises a support 11 on which:
- wells 12 are arranged to receive the sample;
- porous strips 13 are also arranged that extend along the support starting from wells 12 and are in hydraulic connection with them, so that by putting a liquid sample into a well 12, the sample moves by capillary action along the respective strip 13.

Each strip 13 is serves for revealing a specific class of drugs. To this purpose, each strip 13 comprises, starting from well 12:
- a zone 14, comprising a marked antigen in a movable form that is conjugate with the specific class of drugs, so that the sample, by moving along strip 13, takes away the marked antigen with itself;
- a testing transversal line 15 where an antibody is fixedly embedded within the porous matrix of strip 13, said antibody adapted to react competitively with both the marked antigen, causing line 15 to become coloured, and the drugs of the specific class, in which case no colour appearance is observed;
- a control transversal line 16, where a substance is fixedly embedded within the porous matrix, said substance adapted to combine with the sample, thus causing control line 16 to become coloured.

If a drug is present at a concentration lower than a so-called "cut-off' threshold, it cannot saturate the bond positions of the antibody, so that the antibody of test line 15 reacts with the marked antigen and the line of test 15 becomes coloured, when it is attained by the sample. On the contrary, if the concentration is higher than the cut-off value, the drug saturates the bond positions of the antibody and test line 15 does not become coloured.

Only a colour appearance in control line 16 indicates that the sample has correctly flown along strip 13 and reached test line 15. The absence of colour at control line 16 does not allow considering the test valid for the specific class of drugs. A cover 17 and windows 18 for seeing lines 15,16 on support 11 are the remaining parts of "on-site" kit 10.

The immunochemical tests are not able to detect certain substances as such, like cocaine, which cannot be detected directly, but only by cross reactivity. In this case, the test detects a specific metabolite, i.e. benzoylecgonine.

Shin, Lee et al., in Analytical Biochemistry 407 (2020), pp. 281-283, "Microwave-assisted extraction of human hair proteins*",* describe a process for extracting proteins from samples of human hair, where a solution containing a Tris HCl buffer (pH 8.5), thiourea, urea and mercaptoethanol, in the presence of the hair, is exposed to microwaves at a power of 600W for a time set between 5 and 120 minutes. The above-indicated operating conditions are selected so as to degrade the keratin matrix, in order to allow the extraction of macromolecules such as proteins. By this treatment, an extract is obtained that cannot be treated by the above described immunochemical "on-site" techniques.

Watson et al, Alcohol, vol. 16, no. 4, November 1998, pages 279-284, describe a procedure for assessing ethanol consumption in rats by ELISA assay in which acetaldehyde, a primary metabolite of ethanol, is detected in the form of an adduct with proteins, in particular, with keratin.

Moreover, Pragst F. and Balikova A., Clinica Chimica Acta vol. 370 no. 1-2, August 1, 2006, pages 17-49, review several papers published until 2006 on the related art. In particular, reference is made to a process for extracting drugs of abuse from hair by a water solution containing urea and thioglycolate at a specific concentration, as well as to immunochemical techniques for assessing and quantifying the presence of drugs of abuse, or metabolites thereof, in hair, said extraction process and immunochemical techniques being taken from separate papers.

### Summary of the invention

It is therefore a feature of the present invention to provide a method for assessing whether a subject has taken or usually takes drugs of abuse, by examining his/her keratin material, that is easier and quicker to use than the prior art methods and devices in which keratin material is examined.

It is a particular feature of the present invention to provide a method for easily and quickly extracting drugs of abuse and/or metabolites thereof from the keratin material, by which a solution can be obtained for use in an "on-site" qualitative test.

It is also a feature of the invention to provide a method for carrying out an "on-site" qualitative test, in particular, at home, starting from a subject's keratin material, in order to assess whether the subject has taken / habitually takes drugs of abuse.

These and other objects are achieved by a method for assessing whether a drug of abuse and/or a metabolite of a drug of abuse is present in a keratin material according to annexed claim 1, More in detail, the method comprises:
- a step of extracting the drug of abuse and/or the metabolite from the keratin material, the step of extracting comprising:
   - prearranging an amount of the keratin material;
   - prearranging an amount of an extraction composition containing urea;
   - bringing the amount of the keratin material into contact with the amount of the extraction composition, obtaining an extract that contains the drug of abuse and/or the metabolite;
- a step of analysing the extract by an antigen-antibody technique, comprising :
   - performing a reaction of the drug of abuse and/or the metabolite, which acts as an antigen, with a specific antibody;
   - detecting the antigen-antibody reaction.

Since urea and most useful urea derivatives are inexpensive and substantially no toxic substances, the method allows extracting drugs of abuse and/or metabolites thereof cheaply, easily and safely. As better described hereinafter, these and other features of the extracts that can be obtained by the method make it possible to ascertain at home the use, even a chronic use, of drugs of abuse, at a reduced cost and without health risks of people who are in charge of carrying out the tests.

The reaction of the drug of abuse, and/or the metabolite with the specific antibody, is a first reaction, and the method comprises a step of comparing the first reaction with a second reaction between the antibody and a reference antigen for the drug of abuse and/or the metabolite.

The reference antigen is a marked antigen adapted to produce a visually detectable chromophore compound in the second reaction with the antibody. This way, it is possible to assess the presence of the drug, or of the metabolite of a drug, according to the colour of the product of the second reaction.

The reference antigen and said specific antibody are arranged on a respective strip portion of an immunochromatographic quick test.

In fact, the obtained extract, which contains the drug and/or a metabolite thereof, along with the urea, is compatible with the substrates that are used to manufacture the qualitative immunochromatographic quick "on-site" devices, which are currently available for saliva and urine tests. In other words, no significant interactions or interferences occur between the urea residues that are present in the extract and these substrates. Therefore, the method allows using the "on-site" kits, which are currently in use for urine or saliva tests, even for analysing a keratin material.

The method according to the invention, in this exemplary embodiment, allows therefore to benefit of the advantages both of the immunochromatographic quick test devices, i.e. user friendliness, quick response and low cost, and of the analysis of the keratin material, i.e. a reliable response even if the test is carried out after a relatively long time since when the drug has been taken, accordingly it makes it possible to ascertain a chronic use of the drug of abuse.

Moreover, the possibility to use qualitative immunochromatographic quick "on-site" kits makes it possible to understand whether a subject has taken / usually takes drugs of abuse, without using laboratory instruments. For this reason, the method can be used at home, and provides a test result, which can be positive, while keeping it reserved. As described above, the method can be easily used at home, since urea and most urea derivatives are substantially no toxic substances, and the waste material can be disposed at a low cost.

Furthermore, the possibility to test a keratin material by a quick "on-site" method can provide to the health institutions a screening system to establish which extracts, i.e. which subjects must be more quantitatively investigated by more expensive methods such as GC-MS or LC-MS. This would reduce the costs and the time required for assessing whether a plurality of subjects has taken/usually takes a drug, without reducing the reliability of the assessment.

As an alternative, outside of the scope of the invention, the antigen-antibody technique can be a technique to be performed by laboratory instruments, wherein the detection is based on a specific variation of a property of the antigen from when the latter is in a free state, to when it is in a state of combination with the antibody, such as luminescence, wave emission, and so on, by specific instruments. More in particular, the instrumentally implementable antigen-antibody technique can be selected from the group consisting of:
- a Radio Immuno Assay (RIA) technique;
- an Enzyme Immuno Assay (EIA) technique;
- a MEIA technique (Microparticles Enzyme Immuno Assay);
- a CEDIA technique (Cloned Enzyme Donor Immuno Assay);
- a Fluorescence Polarization Immuno Assay (FPIA) technique;
- a Luminescence Immuno Assay (LIA) technique;
- a Kinetic Interaction of Microparticles in Solution (KIMS) technique;
- a Radio Enzymatic assay (REA) technique.

Since also the liquid samples obtained by such an extraction solution are well-suited for use in instrumental immunochemical tests, the method reduces costs and health risks for operators in charge of carrying out these tests, as well as disposal costs of waste material resulting therefrom.

Furthermore, the invention overcomes the limitations of most substances adapted to dissolve the drugs of abuse, which are well-suited for a subsequent qualitative/quantitative instrumental immunochemical test, but are expensive and detrimental to health and environment.

The step of bringing the keratin material into contact with the extraction composition can comprise a step of maintaining the extraction composition in contact with the keratin material at a treatment temperature of at least 50°C for a predetermined high-temperature treatment time, as required for extracting the drug and/or the metabolite at this temperature.

In particular the treatment temperature can be higher than 70°C, more in particular the treatment temperature can be higher than 90°C.

Advantageously, the extraction composition comprises water. In particular the extraction composition can comprise an aqueous solution of urea at a predetermined urea concentration and at a predetermined pH. In this case, the step of maintaining said extraction composition in contact with said keratin material at a treatment temperature comprises a step of boiling the water, i.e. the aqueous solution, and the high-temperature treatment time, during which the boiling is continued, is set between 10 minutes and 20 minutes, for example the boiling is continued during about 15 minutes, as required for extracting the drug and/or the metabolite at boiling conditions, i.e. at about 100°C.

Therefore, the time required for the extraction, according to the invention, is remarkably lower than the time required when using a well-known solvent. This reduces the time for preparing the extracts suitable for semi-quantitative analysis.

Moreover, the treatment conditions, in particular the boiling conditions according to the method can be easily obtained even at home, in particular the boiling temperature of the solution, about water boiling point, is a useful reference for defining an easily repeatable standard extraction procedure.

The urea concentration of the aqueous solution is set between 0.1 mol/litre and 3.0 mol/litre. In particular, the urea concentration can be set between 0.5 mol/litre and 2.0 mol/litre, more in particular, the urea concentration is set between 0.7 and 1.4 mol/litre, even more in particular, the urea concentration is about 1 mol/litre. Preferably, the aqueous solution pH is set between 4.5 and 7. In particular, the pH is set between 5.0 and 6.0, more in particular, the pH is set between 5.1 and 5.5, even more in particular, the pH is about 5.2. To this purpose, the aqueous solution can comprise a buffer system, for example a system consisting of sodium hydrogen phosphate and sodium dihydrogen phosphate (K₂HPO₄ and KH₂PO₄).

As an alternative, the step of contact can provide exposing the extraction composition in contact with the keratin material to microwaves, for example in a common microwave oven, for a predetermined microwave treatment time. Advantageously, the step of microwave treatment is carried out by exposing the composition in contact with the keratin material to microwaves to at a power set between 150 W and 750 W, in particular between 200 and 550 W, more in particular, between 250 W and 500 W. The microwave treatment time can be set between 5 seconds and 30 seconds. In particular, the microwave treatment time is set between 10 and 20 seconds. More in particular, the microwave treatment time is about 15 seconds.

The microwave treatment further reduces the extraction time, with respect to the time that is required, according to the prior art, for preparing liquid samples for professional immunochemical testing of a keratin material. Furthermore, the conditions required by the method can be easily obtained even at home, by a common microwave oven, which allows defining an easily repeatable standard extraction procedure.

No stirring is advantageously needed during the step of contact, irrelevant to whether the latter is carried out by means of heating and maintaining the solution at a temperature, in particular at the boiling point, or it is carried out by exposition to microwaves.

The drug of abuse that can be extracted with the extraction composition, according to the invention, can comprise one drug, or several drugs. The drug or drugs are selected from the group consisting of amphetamine; barbiturate drugs; benzodiazepines; buprenorphine; cocaine; cotinine; EDDP; phencyclidine; ketamine; marijuana; methadone; methamphetamine; opiates; oxycodone; propoxyphene. This list comprises the most widespread drugs of abuse.

In particular, the drug of abuse comprises cocaine, the treatment temperature is higher than 60°C, and a step is provided of selecting the pH value according to the extraction temperature, in order to obtain a substantially quantitative conversion of the cocaine into benzoylecgonine during the step of extracting.

Therefore, the method and the extraction composition according to the invention have specific advantages for assessing whether a subject has taken cocaine. In this case, besides cocaine, a much smaller amount of its metabolite benzoylecgonine is fixed in the consumer's keratin material. The quick "on-site" tests, as well as the tests carried out by laboratory instruments, are carried out by detector devices that are sensitive for the sole benzoylecgonine. Now, the inventors have surprisingly realised that cocaine is substantially fully converted into benzoylecgonine while contacting the keratin material with the extraction composition, typically with an urea aqueous solution. For this reason, the resulting extract contains an amount of benzoylecgonine that is the sum of the benzoylecgonine already present in the keratin material and of the benzoylecgonine obtained from the conversion of the extracted cocaine. Therefore, with the extraction solution and with the method according to the invention, the "on-site" tests and the tests carried out by professional instruments are much more effective for establishing a case of consumption of cocaine, than the tests in which such conversion does not take place.

In particular, the urea present in the extraction composition could also be replaced by a derivative or derivatives thereof selected from the group consisting of: thiourea, tetraethylurea, tetramethylurea and idantoin. In particular, the extraction composition comprises an aqueous solution of thiourea at a predetermined thiourea concentration and at a predetermined pH.

However, Thiourea differs from the other derivatives, and mainly from urea itself, since it produces an extract in which cocaine and benzoylecgonine are present substantially in the same amount ratio than in the keratin material. In fact, thiourea is not able to promote the conversion of cocaine into benzoylecgonine.

The method can be carried out by a device, i.e. a kit, for extracting a drug of abuse or a metabolite thereof from a subject's keratin material, obtaining an extract that contains the drug of abuse and/or the metabolite, the device, which does not form part of the present invention, comprises:
- a preparation container configured for receiving a predetermined amount of the keratin material;
- an predetermined amount of an extraction composition containing urea;
- an extraction container configured for receiving the predetermined amount of extraction composition along with the predetermined amount of said keratin material;
- a means for bringing the amount of the keratin material into contact with the amount of the extraction composition in the extraction container;
- an immunochromatographic quick test device provided with a feeding means for feeding the extract.

In addition to the advantages pointed out when describing the various features of the method, this device allows preparing the extract in a simple way, since it makes the step of weighing the amount of keratin material unnecessary.

Advantageously, the extraction container is a cylindrical container that has a level mark corresponding to the amount of the keratin material, cut at a predetermined length.

In an exemplary embodiment, the extraction composition comprises a urea aqueous solution at a predetermined urea concentration and at a predetermined pH. In particular, the urea concentration is set between 0.1 and 3.0 mol/litre, more in particular, between 0.5 and 2.0 mol/litre, more in particular, the urea concentration is set between 0.7 and 1.4 mol/litre, even more in particular, the concentration is about 1 mol/litre. In particular, the pH is set between 4.5 and 7, more in particular, between 5.0 and 6.0, more in particular, the pH is set between 5.1 and 5.5, even more in particular, the pH is about 5.2.

Advantageously, the extraction container of the kit is configured for withstanding an extraction temperature, in particular 100°C, for a predetermined time, in particular for 20 minutes and/or for withstanding microwaves of a predetermined power, in particular set between 150 W and 750 W, in particular for a predetermined time, for example about 20 seconds.

### Brief description of the drawings

The invention will be now shown with the description of exemplary embodiments of the method and of the device for extracting a drug of abuse or a metabolite thereof from a keratin material, exemplifying but not limitative, with reference to the attached drawings, in which like reference characters designate the same or similar parts, throughout the figures, of which:
- Fig. 1 diagrammatically shows an "on-site" kit, i.e. a conventional device for carrying out quick tests on samples of saliva;
- Fig. 2 shows a kit for extracting a drug of abuse or a metabolite thereof from a keratin material;
- Figs. 3 and 4 show multiple kits for extracting a drug of abuse or a metabolite thereof from a keratin material, in a first exemplary embodiment;
- Fig. 5 shows a kit for carrying out an on-site test for assessing the presence of a drug of abuse or of a metabolite thereof in a keratin material;
- Fig. 6 shows a multiple kits for carrying out an on-site test for assessing the presence of a drug of abuse or of a metabolite thereof in a keratin material;
- Figs. 7-11 show the use of the kit of Figs. 2-4 at prearranging an amount of keratin material for the extraction;
- Figs. 12-13 show the use of the kit in a first part of the step of contact of the amount of keratin material with the extraction composition;
- Fig. 14 shows a step of maintaining the extraction composition in contact with the keratin material at a predetermined treatment temperature for a predetermined treatment time;
- Fig. 15 shows a step of exposing the extraction composition along with the keratin material to microwaves, for a predetermined treatment time;
- Fig. 16 shows the extraction container after the treating of Fig. 14 or 15, containing an extract to be checked;
- Figs. 17 and 18 show a step of treating the extract in a quick on-site immunochromatographic test device.

### Description of preferred exemplary embodiments

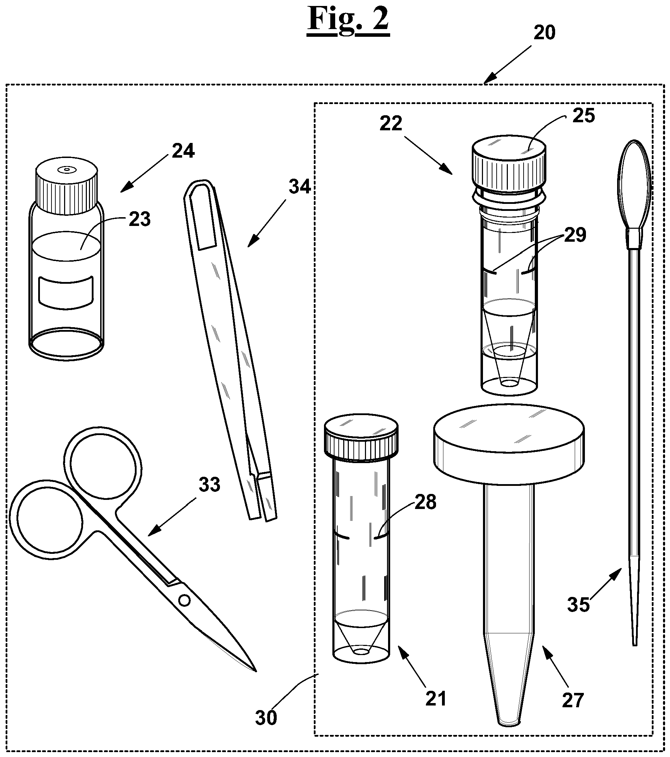

With reference to Fig. 2, a disposable kit 20 is described for extracting a drug of abuse and/or a metabolite thereof that can be present in a keratin material, by an extraction composition 23 to obtain a liquid extract containing said possible drug of abuse and/or a metabolite thereof. Kit 20 comprises a preparation container 21 for preparing the keratin material that is configured to receive a predetermined amount of keratin material. Preparation container 21 can be, for instance, a common Falcon test tube.

In an exemplary embodiment, kit 20 can comprise also common scissors 33 for suitably chopping up the keratin material in preparation container 21.

Kit 20 also comprises an amount of an extraction composition 23 containing urea or a urea derivative, in particular selected among Thiourea, Tetraethylurea, Tetramethylurea and Idantoin. Extraction composition 23 can be supplied in a single-dose bottle 24 of kit 20, so large as to receive an amount of the composition suitable for a single test, i.e. for treating a suitable amount of a single subject's keratin material. For example, the amount of the extraction solution can be about 500 microlitres.

Kit 20 also comprises an extraction container 22 arranged to receive the predetermined amount of extraction composition 23 along with a predetermined amount of keratin material, enough to obtain a liquid extract to be used in a test for revealing the presence of a drug of abuse.

Extraction container 22 is made of a preferably plastic material, suitable for withstanding an extraction temperature, for example about 100°C and/or of a material suitable for withstanding microwaves of a predetermined power, for example about 150-750 W, during a predetermined treatment time.

Extraction container 22 advantageously has a hermetic plug 25 for sealing container 22 during the extraction, as described hereinafter.

For instance, extraction container 22 can have the shape of a test tube, more in particular, the shape of an Eppendorf vial.

Kit 20 can also comprise a pestle 27, preferably of plastic material, that can be arranged in extraction container 22.

In an advantageous exemplary embodiment, extraction container 22 has a level mark 29 that corresponds to the volume of a suitably chopped and compressed amount of keratin material, which in turn corresponds to a predetermined mass of keratin material large enough to allow an extraction.

This way, a user who pushes the keratin material down to lever mark 29 is sure that he/she's using use a suitable amount of keratin material.

In an exemplary embodiment, kit 20 can also comprise a pair of tweezers 34 such for picking up the amount of keratin material prepared in the preparation container 21 and to put it down into extraction container 22, into which extraction composition 23 must be introduced as well.

A notch, not shown, can be optionally provided also in preparation container 21, in order to preliminarily estimate the amount of keratin material 23.

In an exemplary embodiment, kit 20 can also comprise a pipette 35, for example a Pasteur pipette, for withdrawing the extract from extraction container 22 after the extracting it, and for dropping it into a feeding section of a device, in order to check the presence of at least one dugs and/or of a respective metabolite.

For example, the feeding section can be a well 12 of an "on-site" kit as shown in Fig. 1.

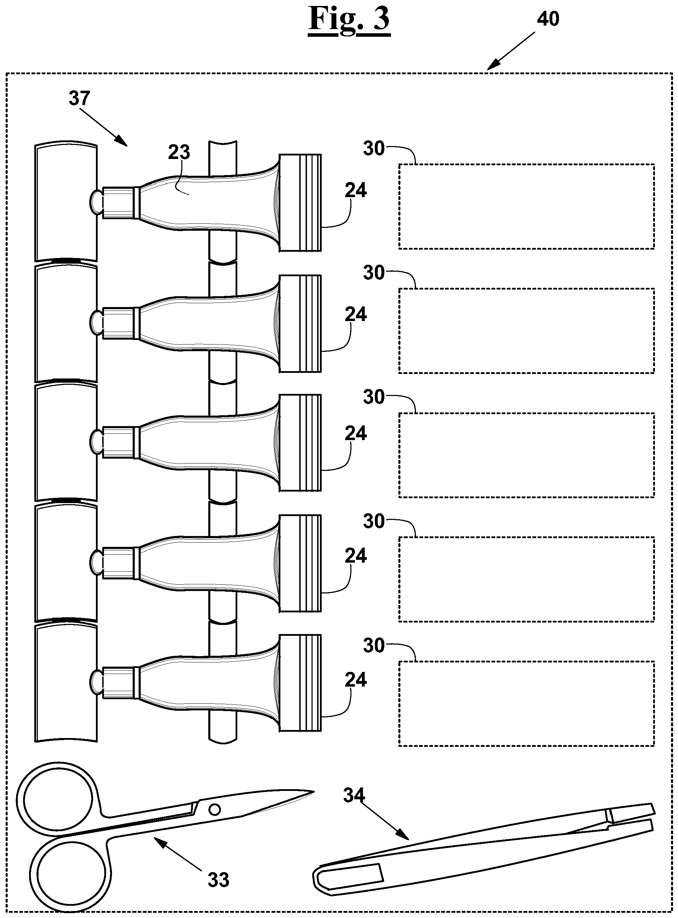

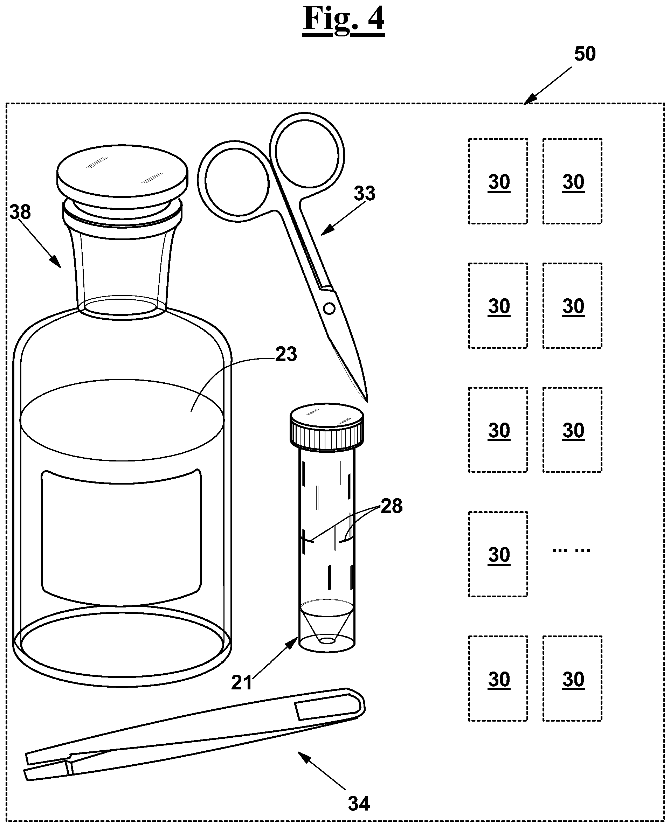

With reference to Figs. 3 and 4, kits 40 and 50 are described for extracting a drug of abuse and/or a metabolite thereof that can be present in a plurality of amounts of keratin material of a plurality of subjects.

Kit 40 comprises a multiple of an amount of the composition suitable for a single test. For instance, kit 40 can contain a plurality of small single-dose bottles 24, each containing an amount of extraction solution suitable for a single test, preferably in the form of a group 37 of printed separable single-dose containers.

Kit 40 also comprises so many disposable modules 30 as small single-dose bottles 24. Each module 30 comprises a preparation container 21 and an extraction container 22 and, preferably, a pestle 27 and/or a pipette 35, as described with reference to Fig. 2.

Kit 50 comprises a bottle 38 of an amount of extraction solution 23 for running a large number of tests. Kit 50 also comprises a plurality of disposable modules 30, of the type described with reference to kit 30. In this case, each module 30 can comprise an additional pipette 35, or a dropper, for picking up a predetermined amount of extraction solution 23 from bottle 38, and for dropping it into extraction test tube 22.

Multiple kits 40 and 50, which comprise a plurality of single-dose amounts of extraction solution 23 and a plurality of disposable modules 30, can be advantageously used in health institutions, for example, for carrying out screening qualitative on a plurality of subjects, in order to establish who of these subjects has to be more deeply investigated.

Kits 40 and 50 advantageously comprise scissors 33 for chopping the keratin material and pair of tweezers 34 for transferring the keratin material from preparation container 21 to extraction container 22.

Extraction container 22, in particular kit 50, can have a second level mark, not shown, larger than recess 29, corresponding to amount of extraction solution 23 needed for carrying out an extraction.

In an exemplary embodiment, extraction test tube 22 of kit 20,40,50 can comprise an own heating means, not shown, which can be used as an alternative to boiling water or other heating means outside kit 20,40,50. For instance, the own heating means can comprise a circuit in which a heating resistance is arranged on extraction test tube 22 and is/can be associated with a battery, the heating circuit being designed for allowing a current during a time long enough to bring the content of extraction test tube 22 to the extraction temperature and to maintain it at the extraction temperature for a suitable extraction time.

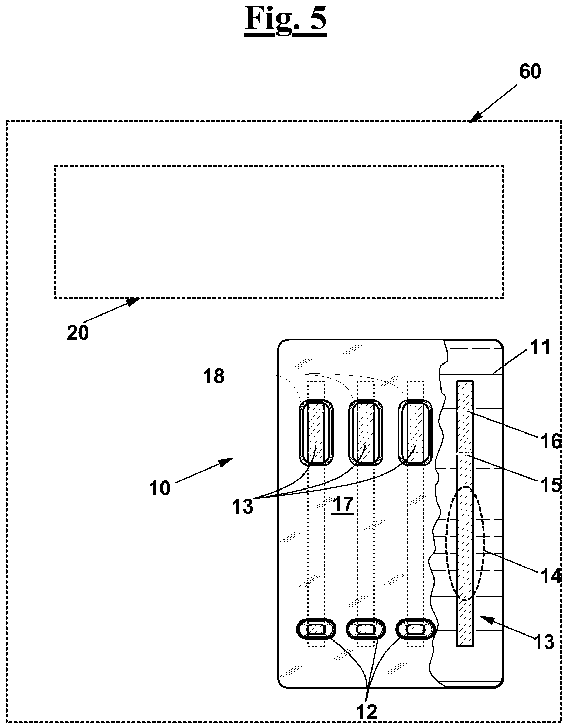

With reference to Fig. 5, a disposable kit 60 is described for assessing the presence of a drug of abuse and/or of a metabolite thereof in a keratin material. Kit 60 comprises a kit 20 as described with reference to Fig. 2, for extracting the possible drug of abuse or a metabolite thereof from the keratin material, and also comprises a kit 10 for carrying out a quick on-site immunochromatographic test, for example, as described with reference to Fig. 1, comprising a feeding means 12 for feeding the extract.

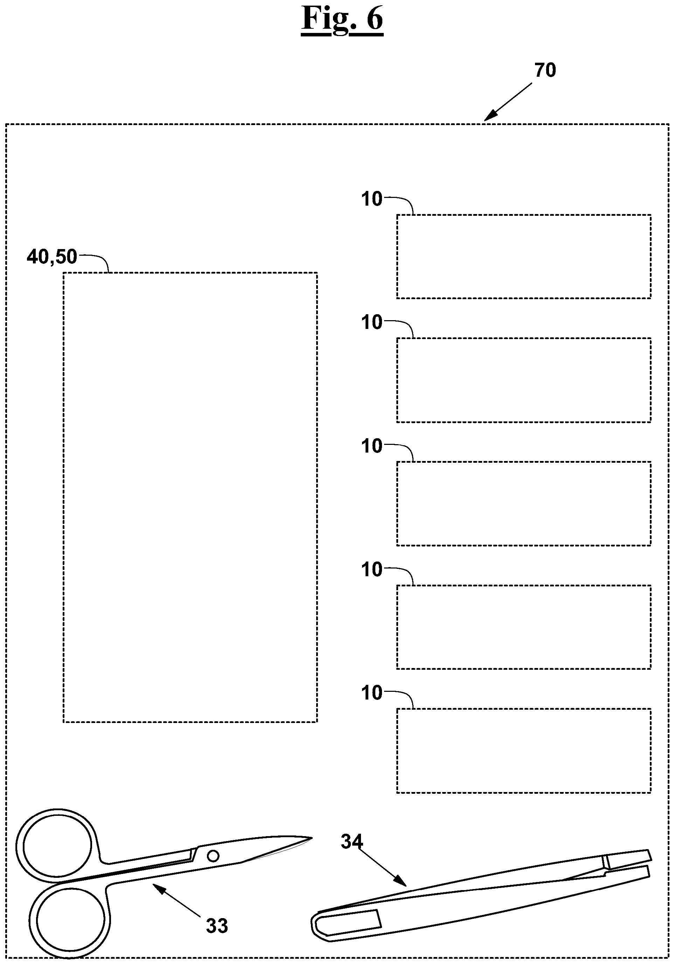

With reference to Fig. 6, a kit 70 is described for checking the presence of a drug of abuse and/or of a metabolite thereof in a plurality of samples of keratin material, in particular, coming from a plurality of subjects. Kit 70 comprises a kit 40 or 50 as described with reference to Fig. 3 or to Fig. 4, and also comprises a plurality of immunochromatographic quick test devices 10, for example, of the type described with reference to Fig. 1.

As an alternative, this device can be a quick "on-site" test kit, for example, a test commonly used for assessing the presence of a drug in the saliva. In this case, a kit 40 for assessing the presence of a drug or of a metabolite thereof comprises above described extraction kit 20 or 30 and such a quick "on-site" test kit 10, whose structure and operation have been described along with the prior art, with reference to Fig. 1.

A detailed instruction sheet, not shown, is available teach how to use kits 20, 40, 50, 60, 70.

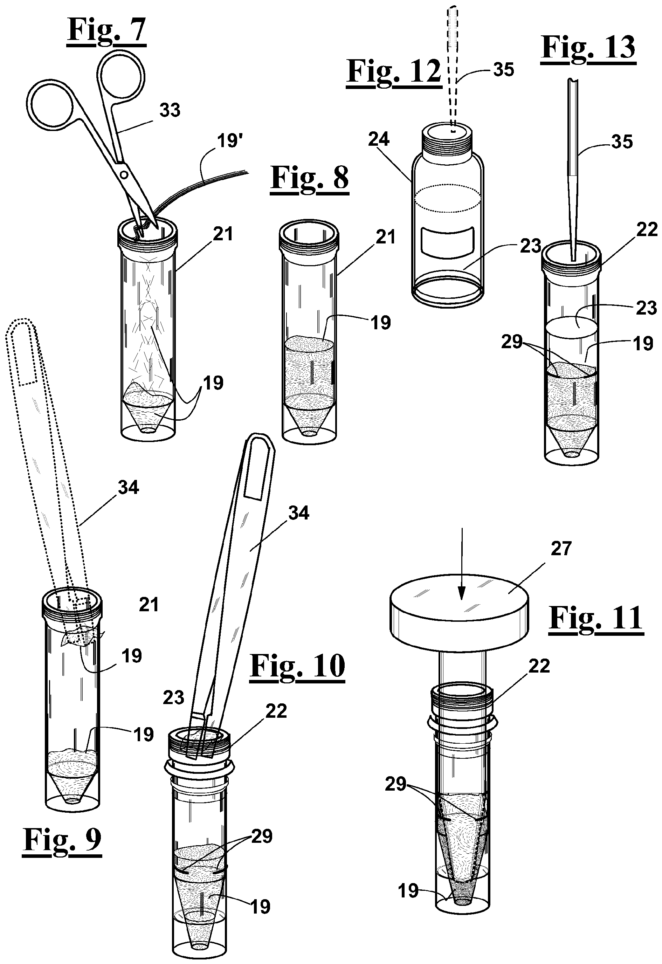

Fig. 7 shows a step of prearranging keratin material 19 into a preparation container 21 of a kit 20,40,50, wherein a material such as hair 19' is chopped by means of scissors 33, within container 21, until it reaches a level high enough to allow the extraction, as shown in Fig. 8.

As Figs. 9 and 10 show, an amount of keratin material 19 is then taken from container 21 and is put into extraction container 22, which has a level mark 29, for example, by tweezers 34. Successively, and preferably even during the previous step, keratin material 19 is compressed within container 22 by pestle 27, in order to bring the level of keratin material 19 to level mark 29, as shown in Fig. 11.

Afterwards, as shown by Figs. 12 and 13, an amount of extraction solution 23 is taken from bottle 24, for example by pipette 35, and is put into container 22, in order to provide a contact between solution 23 and material 19.

Extraction container 22, prepared as above, is closed by hermetic plug 25 and is subjected to an extraction treatment.

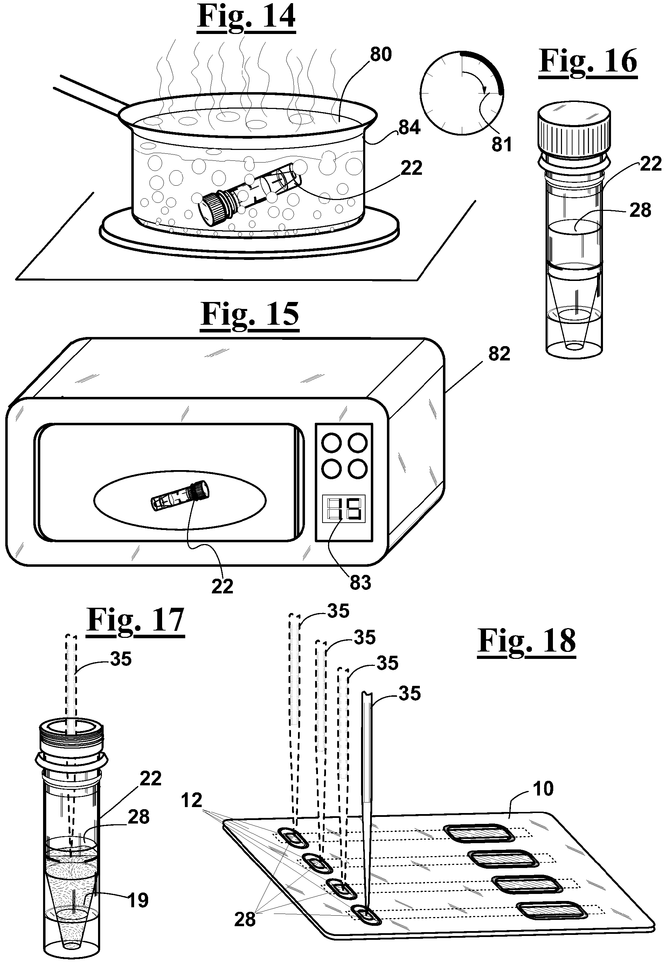

According to an exemplary embodiment, extraction container 22 is brought to an extraction temperature and is kept at that temperature for an extraction time that can be as song as required by the extraction temperature. For instance, as shown in Fig. 14, container 22 is at least partially immersed in a bath of boiling water 80, i.e. a bath of water at about 100°C, for an extraction time 81 normally ranging from 10' to 20', typically of about 15', for example in a common heatable kitchen or laboratory container 84. As an alternative, the extraction can be also occur by exposing container 22 to steam from boiling water, for a predetermined time.

According to another exemplary embodiment, extraction container 22 is exposed to microwaves, for example it is maintained in a common microwave oven 82 for a time 83 of about 15", as shown in Fig. 15, at a radiation power set between 150 W and 750 W, in particular between 200 and 550 W, more in particular, between 250 and 500 W.

Fig. 16 shows an extraction container 22 after the extraction step of Fig. 14 or 15, containing, besides a keratin material residue 19, an extract 28 that can include a drug of abuse or a metabolite thereof, which can have been contained in hair material 19'.

The extract 28 can be then subject to an immunochemical test of known type, for instance by a professional instrumental test, which can use an a technique selected from the group consisting of: a Radio Immuno Assay (RIA) technique; an Enzyme Immuno Assay (EIA) technique; a MEIA technique (Microparticles Enzyme Immuno Assay); a CEDIA technique (Cloned Enzyme Donor Immuno Assay); a Fluorescence Polarization Immuno Assay (FPIA) technique; a Luminescence Immuno Assay (LIA) technique; a Kinetic Interaction of Microparticles in Solution (KIMS) technique; a Radio Enzymatic assay (REA) technique, or, as shown in Figs. 17 and 18, in an "on-site" kit 10 as described with reference to Fig. 1, wherein the extract 28 is taken from the container 22 by disposable pipette 35, and is put into the well/s 12 of kit 10.

### Examples

100 real samples of keratin material have been collected while performing conventional laboratory tests. The prearranged material comprised both positive and negative samples.

The extraction composition was a 98% minimum purity urea aqueous solution at 1M concentration, buffered pH 5.2 by a 0.1 mol/litre phosphate buffer.

The extraction composition, after adding the keratin material, has been maintained at 100°C for 15 minutes by a conventional heating means and/or has been exposed to microwaves at a power of 300-450 W, for 15 seconds.

Portions of each obtained sample have been also analysed by a process GC-MS procedure, i.e. a procedure based on a gas chromatographic analysis and on mass spectrometry.

For the gas chromatographic analysis, a QP2010 Ultra GC/MS equipped with an AOC-20i autosampler have been used, both provided by Shimadzu company.

The chromatographic analysis has been carried out by a 15 metres Rtx - 5MS column filled with Crossbond® 5% biphenyl/ 95% dimethyl polysiloxane, which had an inner diameter of 0.25 mm and a thickness of the steady phase of 0.25 mm (Restek). The temperature of the injector has been maintained at 270°C, with a injection volume of 1 ml in "splitless" mode, in which the whole injected sample enters into the chromatographic column without drawing any sample portion at the injector. The initial temperature the oven, i.e. 100°C, has been maintained for 90 seconds and then it has been increased at a 17°C/min rate up to 320°C, temperature that has been kept for 1 minute. The "transfer line" has been kept at a temperature of 250°C, while the ionic source has been maintained at 200°C. Helium at a flowrate of 1.5 ml/min as carrier has been used.

Briefly, the results obtained by the test according to the invention and the results obtained by GC-MS procedure have shown a total correspondence between the two methods.

## Claims

1. A method for assessing whether a drug of abuse and/or a metabolite of a drug of abuse is present in a keratin material, wherein said drug of abuse is selected from the group consisting of: amphetamine; barbiturate drugs; benzodiazepines; buprenorphine; cocaine; cotinine; EDDP; phencyclidine; ketamine; marijuana; methadone; methamphetamine; opiates; oxycodone; propoxyphene, said method comprising:
- a step of extracting said drug of abuse and/or said metabolite from said keratin material, said step of extracting comprising :
- prearranging an amount of said keratin material;
- prearranging an amount of an extraction composition containing urea, wherein said extraction composition comprises an aqueous solution of urea at a predetermined urea concentration and at a predetermined pH wherein said predetermined urea concentration is set between 0.1 mol/litre and 3.0 mol/litre;
- bringing said amount of said keratin material into contact with said amount of said extraction composition, obtaining an extract containing said drug of abuse and/or said metabolite;
- a step of analysing said extract by an antigen-antibody technique comprising :
- performing a reaction of said drug of abuse and/or said metabolite, which acts as an antigen, with a specific antibody;
- detecting said antigen-antibody reaction,
wherein said reaction of said drug of abuse and/or of said metabolite with said specific antibody is a first reaction, and the method comprises a step of comparing said first reaction with a second reaction between said antibody and a reference antigen for said drug of abuse and/or for said metabolite,
wherein said reference antigen is a marked antigen adapted to produce a visually detectable chromophore compound in said second reaction with said antibody, and wherein said reference antigen and
said specific antibody are arranged on a respective strip portion of an immunochromatographic quick test device.

2. The method according to claim 1, wherein said step of bringing said amount of said keratin material into contact with said amount of said extraction composition comprises a step of maintaining said extraction composition in contact with said keratin material at a treatment temperature of at least 50°C for a predetermined high-temperature treatment time,
in particular, said treatment temperature is higher than 70°C.

3. The method according to claim 2, wherein said step of maintaining said extraction composition in contact with said keratin material at a treatment temperature comprises a step of boiling said aqueous solution, and said high-temperature treatment time is set between 10 minutes and 20 minutes.

4. The method according to claim 1, wherein said step of bringing said amount of said keratin material into contact with said amount of said extraction composition comprises a step of exposing said extraction composition in contact with said keratin material to microwaves, for a predetermined microwaves treatment time.

5. The method according to claim 4, wherein said microwaves are applied to said composition in contact with said keratin material at a power set between 150 W and 750 W, in particular between 200 W and 550 W, more in particular, between 250 W and 450 W, and said microwave treatment time is set between 5 seconds and 30 seconds.

6. The method according to claim 4, wherein said microwave treatment time is set between 10 and 20 seconds, more in particular, said microwave treatment time is about 15 seconds.

7. The method according to claim 1, wherein said urea concentration is set between 0.5 mol/litre and 2.0 mol/litre, in particular, said urea concentration is set between 0.7 mol/litre and 1.4 mol/litre.

8. The method according to claim 7, wherein said pH value is set between 4.5 and 7, more in particular, said pH value is set between 5.0 and 6.0, even more in particular, said pH value is set between 5.1 and 5.5.

9. The method according to claim 1, wherein said drug of abuse comprises cocaine and said treatment temperature is higher than 60°C, and a step is provided of selecting said pH value according to said extraction temperature, in order to obtain a substantially quantitative conversion of said cocaine into benzoylecgonine during said step of extracting.

## Patentansprüche

1. Verfahren zur Bestimmung, ob eine Missbrauchsdroge und/oder ein Metabolit einer Missbrauchsdroge in einem Keratinmaterial vorhanden ist, wobei die Missbrauchsdroge aus der Gruppe bestehend aus Amphetamin, Barbituratdrogen, Benzodiazepinen, Buprenorphin, Kokain, Cotinin, EDDP, Phencyclidin, Ketamin, Marihuana, Methadon, Methamphetamin, Opiaten, Oxycodon und Propoxyphen ausgewählt ist, und wobei das Verfahren umfasst:
- einen Schritt des Extrahierens der Missbrauchsdroge und/oder des Metaboliten aus dem Keratinmaterial, wobei der Extraktionsschritt umfasst:
- Bestimmen einer Menge des Keratinmaterials;
- Bestimmen einer Menge einer Harnstoff enthaltenden Extraktionszusammensetzung, wobei die Extraktionszusammensetzung ein wässrige Harnstofflösung mit einer vorbestimmten Harnstoffkonzentration und einem vorbestimmten pH umfasst, wobei die vorbestimmte Harnstoffkonzentration auf zwischen 0.1 Mol/Liter und 3.0 Mol/Liter eingestellt wird;
- Inkontaktbringen der Menge des Keratinmaterials mit der Menge der Extraktionszusammensetzung, wobei ein die Missbrauchsdroge und/oder den Metaboliten enthaltender Extrakt erhalten wird;
- einen Schritt des Analysierens des Extrakts mittels einer Antigen-Antikörper-Technik, wobei der Analyseschritt umfasst:
- Durchführen einer Reaktion zwischen der Missbrauchsdroge und/oder dem Metaboliten, welche(r) als Antigen fungiert, und einem spezifischen Antikörper;
- Nachweisen der Antigen-Antikörper-Reaktion,
wobei die Reaktion zwischen der Missbrauchsdroge und/oder dem Metaboliten und dem spezifischen Antikörper eine erste Reaktion darstellt, und wobei das Verfahren einen Schritt des Vergleichens der ersten Reaktion mit einer zweiten Reaktion zwischen dem Antikörper und einem Referenzantigen für die Missbrauchsdroge und/oder für den Metaboliten umfasst,
wobei es sich bei dem Referenzantigen um ein markiertes Antigen handelt, welches derart ausgestaltet ist, dass es im Rahmen der zweiten Reaktion mit dem Antikörper eine visuell nachweisbare chromophore Verbindung erzeugt, und wobei das Referenzantigen und der spezifische Antikörper auf einem entsprechenden Streifenabschnitt einer immunochromatographischen Schnelltestvorrichtung angeordnet sind.

2. Verfahren gemäß Anspruch 1, wobei der Schritt des Inkontaktbringens der Menge des Keratinmaterials mit der Menge der Extraktionszusammensetzung einen Schritt des Haltens der mit dem Keratinmaterial in Kontakt stehenden Extraktionszusammensetzung bei einer Behandlungstemperatur von zumindest 50°C für eine vorbestimmte
Hochtemperaturbehandlungsdauer umfasst, und wobei die Behandlungstemperatur bevorzugt mehr als 70°C beträgt.

3. Verfahren gemäß Anspruch 2, wobei der Schritt des Haltens der mit dem Keratinmaterial in Kontakt stehenden Extraktionszusammensetzung bei einer Behandlungstemperatur einen Schritt des Aufkochens der wässrigen Lösung umfasst, und wobei die Hochtemperaturbehandlungsdauer auf zwischen 10 Minuten und 20 Minuten eingestellt wird.

4. Verfahren gemäß Anspruch 1, wobei der Schritt des Inkontaktbringens der Menge des Keratinmaterials mit der Menge der Extraktionszusammensetzung einen Schritt des Behandelns der mit dem Keratinmaterial in Kontakt stehenden Extraktionszusammensetzung mit Mikrowellen für eine vorbestimmte Mikrowellenbehandlungsdauer umfasst.

5. Verfahren gemäß Anspruch 4, wobei die Mikrowellen der mit dem Keratinmaterial in Kontakt stehenden Zusammensetzung mit einer Leistung zugeführt werden, welche auf zwischen 150 W und 750 W, bevorzugt auf zwischen 200 W und 550 W, und stärker bevorzugt auf zwischen 250 W und 450 W eingestellt wird, und wobei die Mikrowellenbehandlungsdauer auf zwischen 5 Sekunden und 30 Sekunden eingestellt wird.

6. Verfahren gemäß Anspruch 4, wobei die Mikrowellenbehandlungsdauer auf zwischen 10 und 20 Sekunden eingestellt wird, und die Mikrowellenbehandlungsdauer bevorzugt etwa 15 Sekunden beträgt.

7. Verfahren gemäß Anspruch 1, wobei die Harnstoffkonzentration auf zwischen 0.5 Mol/Liter und 2.0 Mol/Liter eingestellt wird, und die Harnstoffkonzentration bevorzugt auf zwischen 0.7 Mol/Liter und 1.4 Mol/Liter eingestellt wird.

8. Verfahren gemäß Anspruch 7, wobei der pH-Wert auf zwischen 4.5 und 7 eingestellt wird, der pH-Wert bevorzugt auf zwischen 5.0 und 6.0 eingestellt wird, und der pH-Wert stärker bevorzugt auf zwischen 5.1 und 5.5 eingestellt wird.

9. Verfahren gemäß Anspruch 1, wobei die Missbrauchsdroge Kokain umfasst und die Behandlungstemperatur mehr als 60°C beträgt, und wobei ein Schritt des Auswählens des pH-Werts in Abhängigkeit von der Extraktionstemperatur vorgesehen ist, um während des Extraktionsschritts eine im Wesentlichen quantitative Umwandlung des Kokains in Benzoylecgonin zu erhalten.

## Revendications

1. Procédé destiné à évaluer si une drogue d'abus et/ou un métabolite d'une drogue d'abus est présent dans une matière de kératine, dans lequel ladite drogue d'abus est sélectionnée parmi le groupe constitué par : l'amphétamine ; des drogues barbituriques ; des benzodiazépines; la buprénorphine ; la cocaïne ; la cotinine ; l'EDDP ; la phéncyclidine; la kétamine ; la marijuana ; la méthadone ; la méthamphétamine ; les opiacés ; l'oxycodone ; le propoxyphène, ledit procédé comprenant :
- une étape d'extraction de ladite drogue d'abus et/ou dudit métabolite à partir de ladite matière de kératine, ladite étape d'extraction comprenant :
- le pré-agencement de ladite matière de kératine ;
- le pré-arrangement d'une composition d'extraction contenant de l'urée,
dans lequel ladite composition d'extraction comprend une solution aqueuse d'urée à une concentration d'urée prédéterminée et à un pH prédéterminé dans lequel ladite concentration d'urée prédéterminée est fixée entre 0,1 mol/litre et 3,0 mol/litre ;
- la mise en contact de ladite quantité de ladite matière de kératine avec ladite quantité de ladite composition d'extraction, l'obtention d'un extrait contenant ladite drogue d'abus et/ou ledit métabolite ;
- une étape d'analyse dudit extrait par une technique antigène-anticorps comprenant :
- la réalisation d'une réaction de ladite drogue d'abus et/ou dudit métabolite, qui agit comme un antigène, avec un anticorps spécifique ;
- la détection de ladite réaction antigène-anticorps,
dans lequel ladite réaction de ladite drogue d'abus et/ou dudit métabolite avec ledit anticorps spécifique est une première réaction, et le procédé comprend une étape de comparaison de ladite première réaction avec une deuxième réaction entre ledit anticorps et un antigène de référence pour ladite drogue d'abus et/ou pour ledit métabolite, dans lequel l'antigène de référence est un antigène marqué conçu pour produire un composé chromophore détectable visuellement dans ladite deuxième réaction avec ledit anticorps, et dans lequel ledit antigène de référence et ledit anticorps spécifique sont agencés sur une partie de bandelette respective d'un dispositif d'essai rapide immunochromatographique.

2. Procédé selon la revendication 1, dans lequel ladite étape de mise en contact de ladite quantité de ladite matière de kératine avec ladite quantité de ladite composition d'extraction comprend une étape de maintien de ladite composition d'extraction en contact avec ladite matière de kératine à une température de traitement d'au moins 50 °C pendant une durée prédéterminée de traitement à haute température, en particulier, ladite température de traitement est supérieure à 70 °C.

3. Procédé selon la revendication 2, dans lequel ladite étape de maintien de ladite composition d'extraction en contact avec ladite matière de kératine à une température de traitement comprend une étape d'ébullition de ladite solution aqueuse, et ladite durée de traitement à haute température est fixée entre 10 minutes et 20 minutes.

4. Procédé selon la revendication 1, dans lequel ladite étape de mise en contact de ladite matière kératine avec ladite quantité de ladite composition d'extraction comprend une étape d'exposition de ladite composition d'extraction en contact avec ladite matière de kératine à des micro-ondes, pendant une durée prédéterminée de traitement aux micro-ondes.

5. Procédé selon la revendication 4, dans lequel lesdites micro-ondes sont appliquées à ladite composition en contact avec ladite matière de kératine à une puissance fixée entre 150 W et 750 W, en particulier entre 200 W et 550 W, plus particulièrement, entre 250 W et 450 W, et ladite durée de traitement aux micro-ondes est fixée entre 5 secondes et 30 secondes.

6. Procédé selon la revendication 4, dans lequel ladite durée de traitement aux micro-ondes est fixée entre 10 et 20 secondes, plus particulièrement, ladite durée de traitement aux micro-ondes est d'environ 15 secondes.

7. Procédé selon la revendication 1, dans lequel ladite concentration d'urée est fixée entre 0,5 mol/litre et 2,0 mol/litre, en particulier, ladite concentration d'urée est fixée entre 0,7 mol/litre et 1,4 mol/litre.

8. Procédé selon la revendication 7, dans lequel ladite valeur de pH est fixée entre 4,5 et 7, plus particulièrement, ladite valeur de pH est fixée entre 5,0 et 6,0, encore plus particulièrement, ladite valeur de pH est fixée entre 5,1 et 5,5.

9. Procédé selon la revendication 1, dans lequel ladite drogue d'abus comprend de la cocaïne et ladite température de traitement est supérieure à 60 °C, et une étape est fournie de sélection de ladite valeur de pH en fonction de ladite température d'extraction, afin d'obtenir une conversion substantiellement quantitative de ladite cocaïne en benzoylecgonine pendant ladite étape d'extraction.
